# EUROPEAN PATENT SPECIFICATION

(11) **EP 1 215 928 B1**
(45) Date of publication and mention of the grant of the patent: **15.02.2006**
(21) Application number: 01127544.3
(22) Date of filing: 19.11.2001
(51) Int. Cl.: H04Q 7/34

(54) **Intelligent optimisation system and method of optimising communication performance in a cellular telecommunications network**
Intelligentes Optimierungssystem und Verfahren zur Optimierung der Kommunikationsleistung in einem zellularen Kommunikationsnetz
Système d'optimisation intelligent et procédé pour optimiser la performance de la communication dans un réseau de communication cellulaire

(30) Priority: 15.12.2000 GB 0030755
(43) Date of publication of application: 19.06.2002
(73) Proprietor: MOTOROLA, INC., Schaumburg, IL 60196 (US)
(72) Inventor: Stephens, Paul, Twyford, Berkshire RG10 0AE (GB)
(74) Representative: Jepsen, René Pihl

(56) References cited:
- EP-A- 0 431 956
- DE-A- 19 920 587
- US-A- 6 134 445
- "TS 25.231 V0.3.0 (1999-06);Technical Specification; 3rd Generation Partnership Project (3GPP); Technical Specification Group (TSG) Radio Access Network (RAN); Working Group 1 (WG1); Physical layer - Measurements" 3RD GENERATION PARTNERSHIP PROJECT (3GPP);TECHNICAL SPECIFICATION GROUP (TSG) RADIO ACCESS NETWORK (RAN); WORKING GROUP 1 (WG1); PHYSICAL LAYER - MEASUREMENTS, XX, XX, XP002127381
- HEPSAYDIR E: "Mobile positioning in CDMA cellular networks" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 795-799, XP010353069 ISBN: 0-7803-5435-4

## Description

### Background to the Invention

This invention relates, in general, to a system and method for obtaining optimisation data for an existing first or second-generation cellular communication network. The invention is particularly, but not exclusively, concerned with obtaining radio frequency (RF) optimisation data for GSM (Global System for Mobile communication) cells in order to support revision of a frequency plan to enhance and preferably optimise system performance.

### Summary of the Prior Art

Cellular communication systems provide mobility to users of the system by virtue of their utilisation of radio frequency resources as the information carrier. With a particular system operating a specific air-interface environment, user equipment (interchangeably referred to as a subscriber unit) is generally free to transition between serving base stations supporting the air-interface, with the serving base station providing an interface into other communication domains, such as existing wireline voice telephony systems or internet applications. In terms of handoff of an on-going call involving a subscriber unit, the decision process is generally based on connection quality metrics (such as received signal strength indications (RSSI), bit error rate (BER) or frame erasure rate (FER)), although in certain instances the limited and absolute handling capacity of a cell may warrant that the call be served by a base station in an adjacent cell. Of course, servicing of a subscriber unit by a relatively remote base station (whether during call establishment or during an on-going call situation) may lead to an inferior connection, but provided an interference environment for the cell or system is not adversely affected then it may be preferable that the service provider provide a limited service rather than no service at all.

Unfortunately, bandwidth is limited, especially in the sense of bandwidth allocation to a particular cellular radio service, such as GSM. Furthermore, in view of the capital consideration of supplying base station infrastructure and obtaining operating licences, service providers necessarily seek to extract every last Erlang of capacity from the allocated frequency spectrum. Consequently, cellular systems have developed multiple access techniques to make optimum use of the limited frequency spectrum. Multiple access techniques permit simultaneous transmissions from several mobile subscriber units to a single base station over a plurality of communications channels.Some examples of multiple access techniques are frequency division multiple access (FDMA), time division multiplexing/multiple access (TDM, TDMA) and code division multiple access (CDMA). A CDMA-type system employs spread spectrum signaling.

Having regard to GSM-type systems, it has been found that frequency re-use between cells and/or sectors of cells provides an efficient mechanism of using the available bandwidth. Frequency re-use patterns are arranged to avoid co-channel and adjacent channel interference between neighbouring cells or sectors. The concept of frequency re-use has also spawned umbrella cells that overlay smaller micro or pico cells operating with different frequency patterns. In all instances, power control is important because unnecessary energy in a carrier increases the likelihood of interference. Consequently, cells have a nominal boundary region (defined by BER or RSSI) in which handoff to an adjacent base station is usually initiated.

GSM operates to provide, in-call, a list of neighbours (the BA list) to a subscriber unit, which BA list is used by the subscriber unit for mobile assisted handover (MAHO). Essentially, the subscriber unit monitors signal quality from base stations transmissions (typically the broadcast control channel, BCCH) and reports its findings to its serving base site controller (BSC) for interpretation by, generally, a mobile switching centre (MSC) responsible for operational control of a plurality of base station sub-systems (BSSs). GSM is, however, devoid of any easy ability to provide specific location information concerning the subscriber unit, except for the likely cell location.

It will now be appreciated that service providers strive to provide radio network optimisation, i.e. to maximise the number of subscribers per megahertz (MHz) of spectrum. In this regard, whilst service providers can generate an idealistic frequency plan for a network in advance of system deployment, such idealistic plans seldom reflect or take into account the real-like situation or the changes that can be experienced within a particular geographic service area, such as a cell. To derive GSM optimisation data to tweak operational performance of a deployed system to address changes in environment, service providers are therefore presently reliant upon either the use of test mobile units to support "drive test optimisation" or an intelligent optimisation system (IOS) that supports statistical analysis. Unfortunately, to accomplish radio network optimisation, a service provider must frequently attain measurement metrics reflect radio frequency (RF) coverage and hence system performance, which measurement metrics should ideally be completed on a regular and comprehensive basis throughout a geographical coverage area of interest and preferably across the entire network.

Changes in system performance may occur as a consequence of a change in geography (such as through the erection of a new building), the deployment of a new cell site (such as a micro-cell) or simply a change in environmental conditions due to seasonal variations in tree foliage. In fact, it is generally desirable for a service provider to be aware of all factors that may influence optimum utilisation of the allocated and limited radio bandwidth. Indeed, if the service provider is in possession of accurate data concerning radio network performance, then resolution of network problems is greatly simplified. For example, if the service provider knows that excessive demand for bandwidth occurs at a particular location (known as a "hotspot"), then the service provider can act to remedy the problem by re-configuring the network, such as by introducing a new base transceiver station effectively to create a new cell.

In drive test optimisation, a test mobile is essentially driven around the geographic coverage area of interest in order to experience real-world propagation and system performance. The mobile is configured to measure suitable performance metrics, such as RSSI and BER, for identified locations, with the performance metrics of individual locations then mapped onto a composite coverage plan for display on a geographical map graphical user interface (GUI). Clearly, this method requires specially equipped vehicles and trained technical staff to drive along specific routes within the network coverage area collecting data. Hence drive test optimisation involves a significant financial cost and is, in any case, extremely time consuming. Drive test optimisation is therefore generally restricted to locating specific network faults.

With the majority of hotspots occurring in urban environments having slow congested traffic routes, neither drive test optimisation nor IOS provide effective mechanism for collecting system performance data.

Having regard to IOS, this statistical approach requires deployment of the system for, say, a week or so in order to generate a new frequency plan for the geographic area. Again, IOS is based on a manual process involving competent and trained staff. IOS collects air-interface measurements in GSM and complete a statistical analysis to creat statistical carrier to interference (C/I) matrices for individual cell plans. Propagation conditions experienced by subscriber units involved in the statistical assessment result in measurement reports that reflect received level (RX_Lev), timing advance (and hence a rough indication of distance), RX_Lev of BA list neighbours and cell identity. Unfortunately, in GSM, measurements such as timing advance are not particularly accurate due, for example, to a multi-path propagation environment. While IOS does provide an accurate overall performance summary for visited cells, the mechanism is unfortunately limited in its capacity to identify specific locations within a cell where network performance is compromised. In other words, IOS is unable to provide a definitive indication of the location of a hotspot, but IOS can provide an indication of the existence of the problem, i.e. the identity of the cell. Consequently, frequency planners are studiously and laboriously tasked with assessing radio network optimisation armed only with statistical information and ordinance survey maps, building plans and the like.

European Patent Application publication EP 0 431 956 A discloses a cellular radiotelephone diagnostic system wherein base stations monitors the signal quality of a call and collects information relevant to the performance of the communication system. The data together with a location indication is passed to an evaluation tool which performs a statistical analysis of received data and determines radio coverage characteristics which are presented to a user.

Finally, to complete the picture in terms prevalent air-interface protocols, the Universal Mobile Telephone System (UMTS) has adopted a wideband code-division multiple access (W-CDMA) technique. In contrast to TDM-based cellular systems, a CDMA-based system has a universal frequency re-use that allows frequencies to be used across the entire network, i.e. there is a frequency re-use of one. Such CDMA-based systems operate by virtue of the fact that a single carrier frequency supports a number of communication resources that are structured from discrete, coded sequences. More specifically, each channel is comprised from a unique coded sequence of "chips" that are selected from a relatively long pseudo-random spreading sequence (typically many millions of bits in length). A communication device has access to an information-bearing channel by virtue of a communication device having particular and detailed knowledge of a specific code that identifies the specific bits used by the information-bearing channel. Individual users to the system therefore use a common radio frequency (RF) but are separated by the individual spreading codes. In the downlink each base station is assigned a single spreading code and each of the physical channels is then assigned a separate channelisation code; in UMTS the orthogonal variable spreading factor (OSVF) code set is used. In the up-link, each mobile is assigned its own unique long spreading code.

CDMA-based systems therefore inherently operate in an interference environment because many channels utilise the same carrier frequency, with individual channels merely differing from one another in terms of their uniquely defined coded sequences. However, CDMA-based systems become statistically efficient for large populations of users, and therefore present an attractive and more efficient alternative to FDM-based systems. By way of intermediate summary, although CDMA-based systems can benefit from the use of multiple carriers within specific cells and generally within the system as a whole, CDMA effectively provides a homogenous carrier frequency environment for an area served by a multiplicity of cells. As a consequence, the interference between neighbouring cells is tightly related. This can be contrasted with frequency based systems, such as GSM, where carrier frequency re-use in adjacent or near-adjacent cells is restricted to avoid co-channel and adjacent channel interference.

Despite the imminent introduction of UMTS cellular networks, it is anticipated that GSM will, however, remain the predominant technology for speech communications for many years. In any event, when UMTS is introduced, it is expected that initial deployment of the cell sites will involve collocation with existing GSM sites, especially since: i) the service providers in both GSM and UMTS are likely to be common; ii) the purchase of sites is relatively expensive and often requires legislative, e.g. planning, approval; and iii) the GSM sites are often considered to be the best available sites for providing radio coverage through direct line-of-sight.

### Summary of the Invention

According to a first aspect of the present invention there is provided method of obtaining optimisation data for a cellular radio network supporting a first air-interface in accordance with claim 1.

Preferably the method further includes the step of switching the cellular radio device between first and second air interface transmissions whilst in a call.
Preferably, the cellular radio device operates in a CDMA slotted mode to acquire link metrics for the first air-interface and, in response to operation in the slotted mode, the cellular radio device communicates a report stream containing CDMA cell information and GSM neighbouring cell information.

Reporting of the link metrics may be in the uplink CDMA air-interface transmissions or across the first air-interface.

Preferably, a unique identity of the cellular radio device is used to resolve an association between the location data with the link metrics.

The cellular radio device may automatically participate in obtaining optimisation data, although it may also be commanded to participate in obtaining optimisation data.

The associations between the location data and the link metrics; may be used to compile a coverage map for the cellular radio network.

The cellular communication system may further comprise: means for causing the switching of the cellular radio device between the second air-interface transmissions and the first air-interface during an in-call mode of operation of the cellular radio device.

The means for causing the switching of the cellular radio device may be at least one of: software within the cellular communication device; and an instruction issued to the cellular radio device by infrastructure.

The cellular radio device may contain: a control processor arranged to assess metrics for at least one of a serving base station of the first network of cells and at least one other in-range base station on a BA list associated with the first network of cells, the control processor further arranged to cause one of: i) reporting of link metrics in uplink UMTS air-interface transmissions; and ii) reporting of link metrics in uplink transmission from the cellular radio device across the first air-interface.

The cellular radio device may contain: means for attaching a unique identity of the cellular radio device to uplink transmissions, thereby to provide a mechanism to resolve an association between the location data with the link metrics.

The cellular communication system of a preferred embodiment comprises: a processor in at least one of an MSC and an QMC, the processor arranged to resolve the location data.

The cellular communication system may include an OMC containing a controller arranged to associate the location data with the link metrics.

The OMC may include: means for compiling a coverage map for the cellular radio network based on associations between the location data with the link metrics; and means for configuring the cellular radio network based on the coverage map.

In a further aspect of the present invention there is provided an apparatus in accordance with claim 4.

The apparatus may comprise means for associating location data with link metrics may be responsive to a unique identity of the cellular radio device.

The apparatus, in one embodiment, further comprises: means for compiling a coverage map for the cellular radio network based on associations between the location data with the link metrics; and means for configuring the cellular radio network based on the coverage map.

Advantageously, the present invention provides a system that incorporates an effective mechanism of collecting data and accurately identifying related positional information for the optimisation of a GSM-type network.

The link metric can be a quality metric or an absolute parameter measure.

In summary, according to an underlying inventive concept, a system of the preferred embodiment operates to generate accurate GSM optimisation data through the utilisation of a dual-technology subscriber unit configured to swap between a UMTS air-interface mode and a slotted GSM-type mode. In the GSM mode, system performance data, i.e. measurements metrics such as RX_Lev and BER, are accumulated for a serving cell and BA list neighbours and this system performance data is communicated to a serving operations and maintenance centre OMC through a BSS and MSC. Contemporaneously with the acquisition of GSM performance data, a UMTS call to serving Node Bs operating in soft handover allows a serving MSC or OMC to identify accurately the location of the subscriber unit through a triangulation process. A time reference derived from soft handover of a high bit rate data sequence allows multi-path resolution in the UMTS domain, with an absolute propagation path therefore derivable from the time reference. Correlation, at an OMC level, of an identity of the subscriber unit associates the subscriber location with the GSM system performance data, thereby allowing a processor in the OMC to assess accurately GSM system performance with a view to initiating, as required, radio network optimisation of the GSM system. The need for costly drive testing of a GSM-type system is therefore obviated, thereby advantageously allowing radio network reconfiguration at either the will of the service operator or dynamically.

### Brief Description of the Drawings

An exemplary embodiment of the present invention will now be described with reference to the accompanying drawings, in which:
FIG.1 is a schematic diagram of a cellular network architecture that has been adapted to support the various underlying inventive concepts of various embodiments of the present invention; and
FIG.2 is a flow diagram illustrating the preferred operating method for collecting network data in the system of FIG.1; and
FIG. 3 is a flow diagram illustrating the preferred mechanism for identifying coverage area problems in the GSM-type domain of FIG. 1

### Detailed Description of a Preferred Embodiment

To begin to frame the present invention in context, it has been appreciated that CDMA-based systems (and particularly W-CDMA) are fundamentally able to provide location information. More specifically, from a perspective of soft handover between a number of Node Bs in a number of cells and a high chip rate yielding high resolution of individual multi-path components, the relative location of a mobile with respect to one of more Node Bs can be determined from a triangulation mechanism. More specifically, although CDMA is asynchronous and does not require a timing advance, each chip typically has a duration usually less than about three hundred nanoseconds. Consequently, given an accurate time base reference (such as the start of a given sequence of chips), a triangulation calculation can accurately identify a point of origin of a transmission by resolving an absolute propagation delay for each individual path. In other words, it is the correlation, with respect to Node Bs, of a sequence made up of chips that is used as a time base in a deterministic process for accurately identifying location of the transmitting device.

As will be understood, soft-handover relates to uplink communications from a subscriber unit within a specific cell, wherein such uplink communications are decoded by multiple base station sub-systems in adjacent (i.e. non-primary) cells. Soft-handover is therefore designed to obviate some need for increasing up-link transmission power since it provides space diversity and consequently a better quality of service (QoS) for a nominally selected transmitted power level. Consequently, in systems that constantly seek to limit an interference environment, such as CDMA, soft-handover can provide an improved QoS (e.g. reduced FERs or reduced BERs) for the same power. CDMA systems are therefore geared to look to soft-handover, if possible.

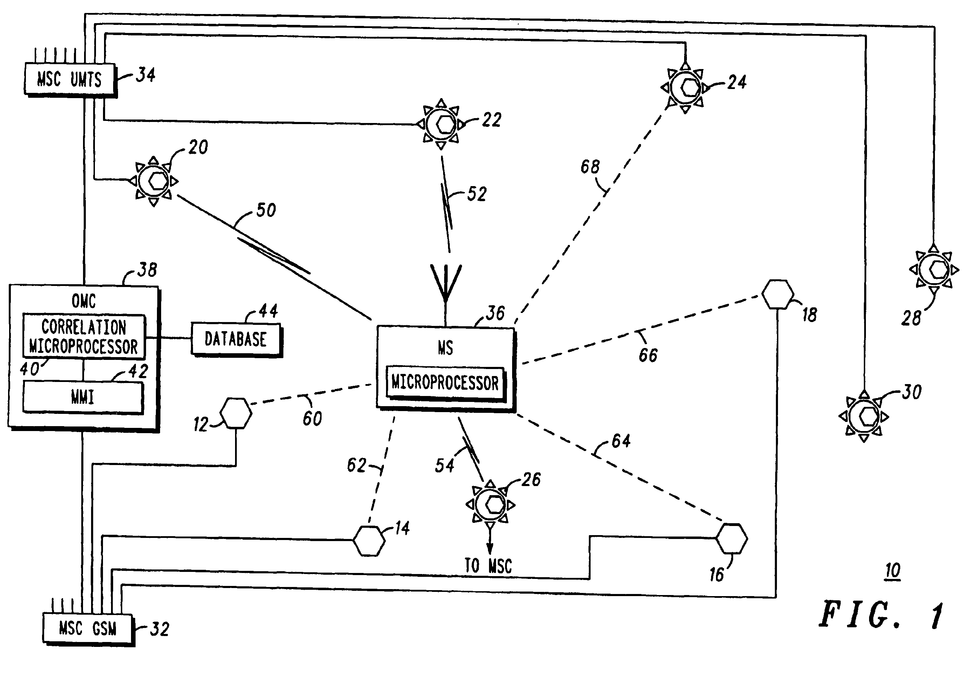

FIG.1 illustrates a typical cellular network architecture 10 that is adapted to support the various underlying inventive concepts of various embodiments of the present invention. The cellular network architecture 10 actually reflects a collocation or overlay of at least parts of an existing second generation cellular system (such as a GSM network) and a third generation cellular system, such as UMTS employing a high chip rate CDMA architecture. Consequently, the cellular network architecture supports a plurality of adjacent GSM cell sites 12-26 and a plurality of UMTS cell sites 20-30. Indeed, at least some of the GSM cell sites 20-26 are collocated with at least some of the UMTS cell sites 20-26.

With respect to the cell sites, whether GSM, UMTS or mixed, the infrastructure within each cell (namely transceivers and cell site controllers, e.g. BTSs, BSCs and Node Bs) is coupled to a mobile switching centre (MSC) 32-34 that controls (from a high level system perspective) communication resource interconnection to a subscriber unit 36. The MSC may be air-interface specific, i.e. the MSC may only support UMTS or GSM connection, although the switching function between the air-interfaces could be consolidated if the systems were commonly owned by a particular service provider. The MSC 32-34 are coupled to an OMC 38 that contains a correlation processor 40 and, typically, also a man-machine interface 42. The correlation processor 40 is generally coupled to a database 44 that is arranged to store executable code, network configuration tables and performance matrices (such as C/I matrices and BER/FER data with respect to location). The executable code may include code arranged to assess location (based on triangulation), although this code may be de decentralised to the MSC layer serving UMTS (CDMA-type) communications.

While the cellular network architecture 10 of the preferred embodiment may support GSM-specific or UMTS-specific communication apparatus (e.g. dedicated air-interface phones or the like), the subscriber unit 36 is a multi-mode device supporting at least GSM and UMTS. Consequently, the subscriber unit is able to communicate with any suitable base station. Indeed, in view of the multi-mode nature of the subscriber unit 36, handoff of connections between GSM and UMTS environments is possible, although there would clearly be a drop in channel capacity when moving to GSM at, say, 16kbps. For the sake of clarity, only a single subscriber unit 36 is shown, although the system and, indeed, each cell is likely to contain tens, if not hundreds and potentially thousands of subscriber units in both active and standby modes of operation. Also for the sake of clarity, single band (i.e. single technology) cellular equipment, e.g. a conventional GSM phone, is not shown in FIG. 1 since it is incompatible with the concepts of the present invention.

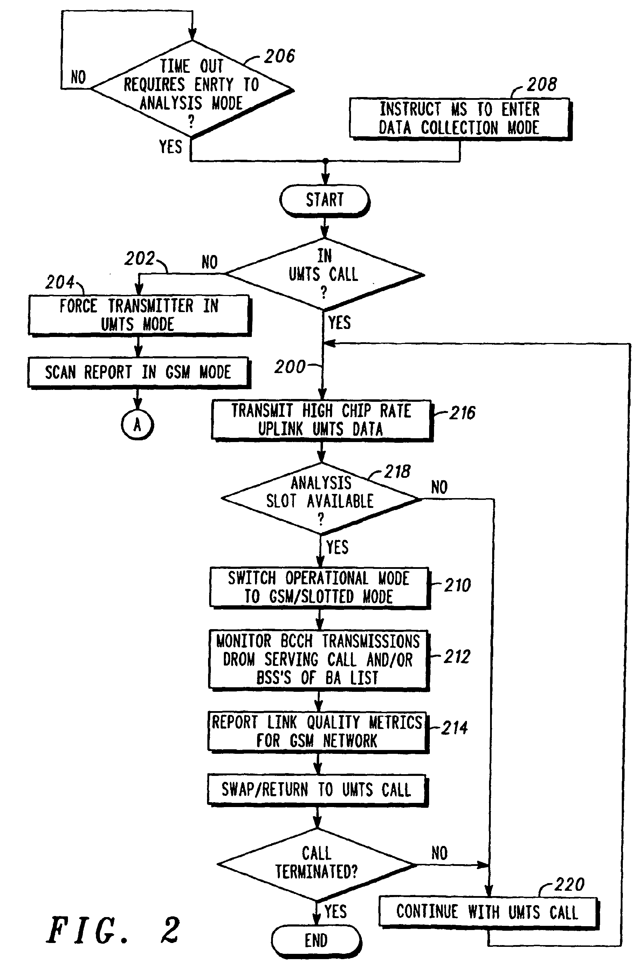

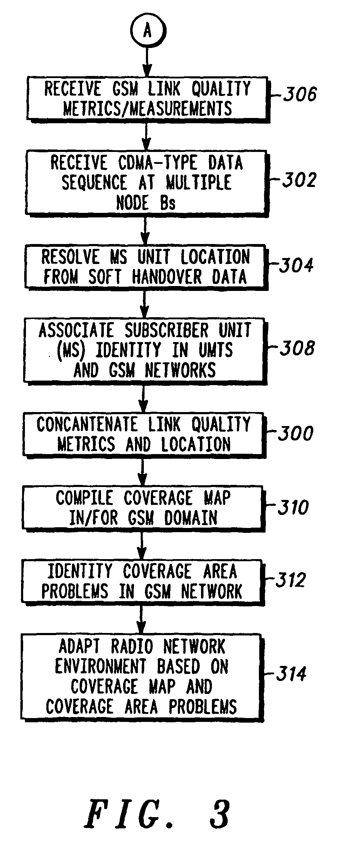

As regards system operation, the principal steps are illustrated in FIGs. 2 and 3, with FIG. 2 indicative of the mechanism for acquiring raw performance data and FIG. 3 illustrative of processing of the raw data for radio network optimisation purposes. It will further be appreciated that the principal steps of FIGs. 2 and 3 can be re-ordered and performed contemporaneously or successively in relation to one another. The subscriber unit 36 is able to support the present invention either during in-call operation 200 or idle mode operation 202, although the requirement for uplink transmissions means that its use in an idle mode would require some form of forced uplink transmission 204 for some period of time and hence would generally reduce battery life in a mobile device environment. Indeed, the present invention can be initiated either independently (e.g through a time-out process 206) by a suitably configured subscriber unit 36 or actioned by a suitably configured or instructed 208 subscriber unit in response to a downlink system command.

For the sake of explanation and illustrative purposes only, it is assumed that the subscriber unit 36 is a dual-technology mobile cellphone supporting second-generation GSM and third-generation W-CDMA. Moreover, for the sake of illustration, it is assumed that the subscriber unit is operating in-call 200, with the dominant service or path being W-CDMA. Of course, the present invention would also work in the situation where the dominant path is actually GSM, i.e. that W-CDMA is not actively used for a particular connection although the service is available at the location of the subscriber unit 36.

Operation of the preferred embodiment of the present invention requires that the subscriber unit 36 switch 210 between its alternative air-interface systems. The subscriber unit 36 monitors BA list transmissions 212 for in-range BSSs in GSM and then reports 214 (in a similar manner to MAHO operation) corresponding signal quality metrics back into a high-level management system, e.g. a serving MSC and typically a serving OMC, in the GSM infrastructure. Turning to operation of the subscriber unit 36 in the W-CDMA mode, the system of the preferred embodiment operates in a soft handover condition in order for uplink W-CDMA transmissions 216 to be resolvable to compensate for multi-path and hence to identify a relatively accurate origin of uplink transmission. In the UMTS in-call mode, the switch to monitoring of the GSM network is multiplexed subject to an availability 218 of suitable analysis slots, with the UMTS call takes otherwise taking precedence 220.

In both of the GSM and W-CDMA uplink instances, there is a need for the system of the present invention to associate 300 location data 302-304 with signal quality metric data 306. Such an association is preferably accomplished 308 by ensuring that each report (whether on the GSM or W-CDMA air-interfaces) is tagged with a subscriber identity, such as the unique International Mobile Subscriber Identity (IMSI) number or the Mobile Station International Subscriber ISDN (MSISDN) number.

With respect to location identification 304, since this requires the correlation of W-CDMA data through at least two and generally more serving Node Bs, location identification is preferably preformed by location resolution software located in a suitable processor at the MSC level. Of course, the location determination could be accomplished at the OMC level (especially where uplink data is through Node Bs controlled by different MSCs). Essentially, therefore, a combination of the raw location data or specific location information and subscriber unit identification (from a W-CDMA connection) is communicated to radio network optimisation logic in, typically, the OMC 38. With the OMC 38 also responsive to signal quality metrics (in the GSM domain) for BA list members, a coverage matrix can be established in the OMC through the concatenation 300 and association 308, in the correlation processor 40, of the signal quality metrics 306 and the location data 302 specific to the subscriber unit 36. The coverage matrix is typically developed over time and, as such, the coverage matrix and associated raw data is generally stored in the database 44. The coverage matrix is therefore able effectively to produce 310 a coverage map for the GSM domain (based in part on W-CDMA location data and also on GSM BA list link quality data) that identifies 312 particular areas of poor coverage for the existing GSM system. The coverage map can be configured on several time scales, including measures of qualitative and quantitative coverage for different times of day, different seasons or on a daily, weekly, weekendly or other arbitrarily selected time frame. Clearly, once location and quality of service data has been correlated, then meaningful output, e.g. the identification of hotspots, can be provided to a system designer by way, for example, of the man-machine interface 42 for radio network optimisation. Adaptation 314 of the GSM environment can then occur on a periodic or dynamic basis.

By way of practical example, returning to the dual-technology subscriber unit 36 of FIG.1, the subscriber unit 36 is initially in soft handover 50-54 with UMTS cells 20, 22 and 26. Consequently, the correlation processor 40 obtains location information concerning the subscriber unit 36, since multi-path to specific Node Bs in the respective UMTS cells can be resolved from the high chip rate and a correlated data sequence from the soft handover process. When effectively idle from W-CDMA transmissions, a scanning receiver of the subscriber unit 36 transfers the subscriber unit 36 into a slotted mode in which the subscriber unit 36 receives and then reports on its GSM propagation environment 60-68, namely GSM cells 12-18 and 24. With radio network optimisation based on an assimilation of geographically accurate C/I matrices (for GSM), the OMC has access to updated RF coverage plans and location information disclosing the position of hotspots and other problems within individual GSM cells.

While the preferred embodiment has been discussed in the context of a transition in the air-interface operational mode, it will be understood that UMTS supports the so-called "slotted mode". Essentially, whilst in a UMTS call, the UMTS technical standard has made provision for monitoring of another co-existing (generally second generation) system, e.g. GSM. More specifically, designers are conscious that the UMTS air-interface may be lost during in-call scenario and so, in order to preserve information flow, it is envisaged that the UMTS call will default to an alternative but co-existing system, e.g. GSM. The UMTS system is therefore set up to monitor both UMTS cells and neighbour GSM cells in the slotted mode and to report link quality metrics for these alternative systems. Indeed, in the slotted-mode, uplink reporting of link quality metrics from the subscriber unit is usually in the form of a mixed stream of GSM cell data and UMTS cell data. Consequently, from an infrastructure perspective, there is already some form of association of the GSM data with the UMTS data in view of the collocation of the link quality metric data in an uplink control channel assigned to a specific subscriber unit. The requirement for IMSI-type tagging of distinct messages is therefore superfluous in the UMTS slotted mode since a suitable association already exists. Clearly, the coverage matrix can be established in the OMC (or the like) through the concatenation of the GSM signal quality metrics and the location data specific to the subscriber unit, with the concatenation somewhat simplified in view of the collocation of the report data for the serving and neighbouring UMTS cells and the neighbouring GSM cells (inherently available from UMTS slotted mode reporting structures). Operational steps 302 and 306 (of FIG. 3) may therefore be combined and the processing requirement behind step 308 reduced when UMTS slotted mode operation is adopted to support the acquisition of data required by the preferred embodiments of the present invention.

Alternative embodiments of the invention may be implemented as computer program code encoded on a computer program product for use with a computer system. It is expected that such a computer program product may be distributed as a removable medium with accompanying printed or electronic documentation (e.g. shrink-wrapped software), preloaded with a computer system or distributed from a server or electronic bulletin board over a network (e.g. the Internet or World Wide Web). A series of computer instructions can therefore either be fixed on a tangible medium or fixed in a computer data signal embodied in a carrier wave that is transmittable to a computer system using wireline or wireless transmission techniques. The removable (i.e. tangible) medium may be a computer readable media, such as a diskette, CD-ROM, DVD-ROM or RAM, fixed disc, magneto-optical discs, ROMs, flash memory or magnetic or optical cards. The series of computer instructions embodies all or part of the functionality previously described herein with respect to the system.

Software embodiments of the invention may be implemented in any conventional computer programming language. For example, preferred embodiments may be implemented in a procedural programming language (e.g. "C") or an object oriented programming language (e.g. "C++").

Although the preferred operating method is realised by general or specific-purpose processor or logic circuits programmed with suitable machine-executable instructions, hardware components may possibly be used to implement certain features of the present invention. Of course, the present invention may be performed by a combination of hardware and software.

In the context of the present invention, the term subscriber unit should be construed broadly and includes fixed equipment (such as computer terminals) as well as mobile subscribers (MS). Furthermore, for the avoidance of doubt, "link metric" should be construed to be a measure of one or both of a quality parameter (such as BER) or an absolute value (such as Rx_Lev). Indeed, as an example, in the UMTS slotted mode, link quality is generally only measured in terms of Rx_Lev.

It will, of course, be appreciated that the above description has been given by way of example only and that modifications in detail may be made within the scope of the invention. For example, whilst the preferred embodiment of the present invention contemplates that radio network optimisation data is assimilated at a OMC from signal quality metrics and location information, the radio network optimisation function could be distributed or even located at an MSC level or lower. Furthermore, whilst the reporting of signal quality metrics for the BA list neighbours and serving cell is preferably communicated uplink over the GSM air-interface (in the preferred embodiment), an alternative embodiment contemplates that the signal quality metrics could be communicated over the W-CDMA air-interface to the GSM OMC or the like responsible for radio network optimisation. Moreover, whilst the present invention has been described in respect of GSM technology in conjunction with UMTS technology, the underlying inventive concept is equally applicable to any other first or second generation cellular technology in conjunction with UMTS technology (or, indeed, any overlaid telecommunication system that can provide pertinent geographic data). For the avoidance of doubt, the present invention is generally applicable to any first or second-generation cellular technology with which multimode UMTS is concurrently collocated. Clearly, the underlying inventive concept is not limited to a co-existing GSM-UMTS environment, with this system merely representing a particular realisation of a mechanism that generates optimisation data for an existing system subsequently overlaid with an enhanced system supporting location identification capabilities.

## Claims

1. A method of obtaining optimisation data for a cellular radio network supporting a first air-interface, the method **characterized by** comprising:
deriving (26) location data for a cellular radio device (36) from soft handover data pertaining to transmissions supported by a second air interface from the cellular radio device (36), the second air-interface being different to the first air-interface;
collecting (306), substantially contemporaneously with the second air-interface transmissions, link metrics for the first air-interface associated with the cellular radio-device (36); and
associating the (300) location data with the link metrics.

2. The method of obtaining optimisation data according to claim 1, further comprising:
switching the cellular radio device (36) between second air-interface transmissions and the first air-interface during an in-call mode of operation of the cellular radio device.

3. The method of obtaining optimisation data according to claim 1 or claim 2 further comprising
compiling (310) a coverage map for the cellular radio network based on associations between the location data with the link metrics; and
configuring (314) the cellular radio network based on the coverage map.

4. An apparatus for obtaining optimisation data for a cellular radio network supporting a first air-interface, the apparatus **characterized by** comprising:
means for deriving location data for a cellular radio device (36) from soft handover data pertaining to transmissions supported by a second air interface from the cellular radio device (36), the second air-interface being different to the first air-interface;
means for collecting substantially contemporaneously with the second air-interface transmissions, link metrics for the first air-interface associated with the cellular radio-device (36); and
means for associating the (300) location data with the link metrics.

5. The apparatus for obtaining optimisation data according to claim 4, further comprising:
means for switching the cellular radio device (36) between second air-interface transmissions and the first air-interface during an in-call mode of operation of the cellular radio device.

6. The apparatus for obtaining optimisation data according to claim 4 or claim 5 further comprising:
means for compiling (310) a coverage map for the cellular radio network based on associations between the location data with the link metrics; and
means for configuring (314) the cellular radio network based on the coverage map.

## Patentansprüche

1. Verfahren zum Erhalten von Optimierungsdaten für ein zellulares Funknetz, das eine erste Luftschnittstelle unterstützt, wobei das Verfahren **dadurch gekennzeichnet ist, dass** es umfasst:
Ableiten (26) von Standortdaten für eine zellulare Funkeinrichtung (36) aus Soft-Handover-Daten, die zu Übertragungen gehören, die durch eine zweite Luftschnittstelle von der zellularen Funkeinrichtung (36) unterstützt werden, wobei die zweite Luftschnittstelle von der ersten Luftschnittstelle verschieden ist;
Erfassen (306), im Wesentlichen gleichzeitig mit den Übertragungen der zweiten Luftschnittstelle, von Verbindungsmetriken für die erste Luftschnittstelle, die mit der zellularen Funkeinrichtung (36) verknüpft ist; und
Verknüpfen der (300) Standortdaten mit den Verbindungsmetriken.

2. Verfahren zum Erhalten von Optimierungsdaten gemäß Anspruch 1, weiterhin umfassend:
Schalten der zellularen Funkeinrichtung (36) zwischen Übertragungen der zweiten Luftschnittstelle und der ersten Luftschnittstelle während einer in einem Anruf befindlichen Betriebsart der zellularen Funkeinrichtung.

3. Verfahren zum Erhalten von Optimierungsdaten gemäß Anspruch 1 oder Anspruch 2, weiterhin umfassend:
Erstellen (310) einer Versorgungskarte für das zellulare Funknetz basierend auf Verknüpfungen zwischen den Standortdaten mit den Verbindungsmetriken; und
Konfigurieren (314) des zellularen Funknetzes basierend auf der Versorgungskarte.

4. Vorrichtung zum Erhalten von Optimierungsdaten für ein zellulares Funknetz, das eine erste Luftschnittstelle unterstützt, wobei das Verfahren **dadurch gekennzeichnet ist, dass** es umfasst:
Mittel zum Ableiten von Standortdaten für eine zellulare Funkeinrichtung (36) aus Soft-Handover-Daten, die zu Übertragungen gehören, die durch eine zweite Luftschnittstelle von der zellularen Funkeinrichtung (36) unterstützt werden, wobei die zweite Luftschnittstelle von der ersten Luftschnittstelle verschieden ist;
Mittel zum Erfassen, im Wesentlichen gleichzeitig mit den Übertragungen der zweiten Luftschnittstelle, von Verbindungsmetriken für die erste Luftschnittstelle, die mit der zellularen Funkeinrichtung (36) verknüpft ist; und
Mittel zum Verknüpfen (300) der Standortdaten mit den Verbindungsmetriken.

5. Vorrichtung zum Erhalten von Optimierungsdaten gemäß Anspruch 4, weiterhin umfassend:
Mittel zum Schalten der zellularen Funkeinrichtung (36) zwischen Übertragungen der zweiten Luftschnittstelle und der ersten Luftschnittstelle während einer in einem Anruf befindlichen Betriebsart der zellularen Funkeinrichtung.

6. Vorrichtung zum Erhalten von Optimierungsdaten gemäß Anspruch 4 oder Anspruch 5, weiterhin umfassend:
Mittel zum Erstellen (310) einer Versorgungskarte für das zellulare Funknetz basierend auf Verknüpfungen zwischen den Standortdaten mit den Verbindungsmetriken; und
Mittel zum Konfigurieren (314) des zellularen Funknetzes basierend auf der Versorgungskarte.

## Revendications

1. Procédé pour obtenir des données d'optimisation pour un réseau radio cellulaire supportant une première interface air, procédé **caractérisé en ce qu'**il comprend de :
dériver (26) des données de position pour un dispositif radio cellulaire (36) à partir de données douces de transfert entre cellules appartenant à des transmissions supportées par une deuxième interface air à partir du dispositif radio cellulaire (36), la deuxième interface air étant différente de la première interface air ;
collecter (306), sensiblement simultanément aux transmissions de deuxième interface air, des métriques de liaison pour la première interface air associée au dispositif radio cellulaire (36) ; et
associer (300) les données de position aux métriques de liaison.

2. Procédé pour obtenir des données d'optimisation selon la revendication 1, comprenant en outre de :
commuter le dispositif radio cellulaire (36) entre des transmissions de deuxième interface air et la première interface air durant un mode en cours de conversation de fonctionnement du dispositif radio cellulaire.

3. Procédé pour obtenir des données d'optimisation selon la revendication 1 ou 2, comprenant en outre de :
compiler (310) une carte de couverture pour le réseau radio cellulaire sur la base d'associations entre les données de position et les métriques de liaison ; et
configurer (314) le réseau radio cellulaire sur la base de la carte de couverture.

4. Dispositif pour obtenir des données d'optimisation pour un réseau radio cellulaire supportant une première interface air, dispositif **caractérisé en ce qu'**il comprend :
des moyens pour dériver des données de position pour un dispositif radio cellulaire (36) à partir douces de transfert entre cellules appartenant à des transmissions supportées par une deuxième interface air à partir du dispositif radio cellulaire (36), la deuxième interface air étant différente de la première interface air ;
des moyens pour collecter, sensiblement simultanément aux transmissions de deuxième interface air, des métriques de liaison pour la première interface air associée au dispositif radio cellulaire (36) ; et
des moyens pour associer (300) les données de position aux métriques de liaison.

5. Dispositif pour obtenir des données d'optimisation selon la revendication 4, comprenant en outre :
des moyens pour commuter le dispositif radio cellulaire (36) entre des transmissions de deuxième interface air et la première interface air durant un mode en cours de conversation de fonctionnement du dispositif radio cellulaire.

6. Dispositif pour obtenir des données d'optimisation selon la revendication 4 ou 5, comprenant en outre :
des moyens pour compiler (310) une carte de couverture pour le réseau radio cellulaire sur la base d'associations entre les données de position et les métriques de liaison ; et
des moyens pour configurer (314) le réseau radio cellulaire sur la base de la carte de couverture.
